# EUROPÄISCHE PATENTSCHRIFT

(11) **EP 1 502 531 B1**
(45) Veröffentlichungstag und Bekanntmachung des Hinweises auf die Patenterteilung: **31.05.2006**
(21) Anmeldenummer: 04017544.0
(22) Anmeldetag: 23.07.2004
(51) Int. Cl.: A47J 31/46, A47J 31/54, A47J 31/44

(54) **Kaffeebrühvorrichtung mit Überlauf**
Coffee brewing device with return flow
Machine à café avec dérivation

(30) Priorität: 29.07.2003 DE 10334545
(43) Veröffentlichungstag der Anmeldung: 02.02.2005
(73) Patentinhaber: PAV PATENTVERWERTUNG KG, 83395 Freilassing (DE)
(72) Erfinder:
(74) Vertreter: Grünecker, Kinkeldey, Stockmair & Schwanhäusser Anwaltssozietät

(56) Entgegenhaltungen:
- EP-A- 0 404 688
- WO-A-02/100227
- DE-U- 9 115 708
- US-A- 5 778 765

## Beschreibung

Die vorliegende Erfindung betrifft eine Kaffeebrühvorrichtung mit einem entnehmbaren Flüssigkeitsbehälter.

Hierbei handelt es sich um eine gängige Kaffeemaschine, die einen entnehmbaren und nachfüllbaren Wassertank aufweist wie es z.B. in EP-A-0 404 688 offenbart ist, der vor Benutzung der Kaffeemaschine wieder an Ort und Stelle zurückgesetzt wird. Je nach Ausführungsform der Kaffeemaschine handelt es sich bei der Brüheinheit um einen Durchlauferhitzer oder einen Boiler, der portionsweise heißes Wasser dem gemahlenen Kaffeepulver zuführt. Einige Maschinen verwenden Brühkammem, in die mit gemahlenem Kaffee gefüllte Filterkissen (Filterpads) eingelegt werden. Nach Schließen der Brühkammer wird dann heißes Wasser in genau portionierter Menge eingeströmt. Bei einigen Maschinen ist hierzu ein Zulaufschlauch zwischen einem Boiler oder einem sogenannten Thermoblock als Durchlauferhitzer und der Einlasseinrichtung der Brühkammer, die mit einem Ventil versehen sein kann, vorhanden. Viele dieser Vorrichtungen haben sich im Einsatz ganz gut bewährt. Dennoch ist man bestrebt, auch hier Verbesserungen herbeizuführen.

Es ist daher die Aufgabe der vorliegenden Erfindung, eine eingangs genannten Kaffeebrühvorrichtung hinsichtlich ihrer Gebrauchsqualität zu verbessern.

Diese Aufgabe wird bei einer gattungsgemäßen Kaffeebrühvorrichtung dadurch gelöst, dass eine Rücklaufleitung vorgesehen ist, deren Auslassbereich zwischen einer Funktionsstellung, in der der Auslassbereich in den Flüssigkeitsbehälter mündet, und eine Entnahmestellung zum Entnehmen des Flüssigkeitsbehälters bewegbar ausgestaltet ist. Die Rücklaufleitung kann z.B. gewährleisten, dass bei Ausdehnungsprozessen im Boiler kein Wasser zur Brüheinheit geführt wird, solange ein Einströmen von erwärmtem oder heißem Wasser noch nicht gewünscht ist. Das hat zum einen den Vorteil, dass sich bei Heizvorgängen kein unnötiger Druck im Boiler bzw. in der Brüheinheit aufbaut, bevor nicht eine Heißwasserentnahme tatsächlich gewünscht ist. Zum anderen kann die Rücklaufleitung auch dazu benutzt werden, erst einmal sich in der Zulaufleitung befindliches, nicht mehr komplett aufgeheiztes Wasser zu entfemen und eine Heißwassereinspeisung erst zu beginnen, wenn Wasser mit geeigneter Temperatur am Einlass vorliegt. Dieses überschüssige Wasser wird dann über den Auslassbereich der Rücklaufleitung quasi als Überlauf in den Flüssigkeitsbehälter zurückgeführt. Damit aber der abnehm- bzw. entnehmbare Flüssigkeitsbehälter störungsfrei entnommen und wieder angefügt werden kann, ist der Auslassbereich beweglich ausgestaltet. In der Funktionsstellung nimmt der Auslassbereich eine Position ein, in der ein sicherer Rücklauf in den Flüssigkeitsbehälter gewährt ist. Damit kein Wasser an anderen Stellen der Kaffeebrühvorrichtung eindringen kann, eignet sich hierzu insbesondere, wenn der Auslassbereich in den Flüssigkeitsbehälter hineinragt oder diesen so überragt, dass das Wasser sicher in den Flüssigkeitsbehälter einfließen kann. Um die Entnehmbarkeit des Flüssigkeitsbehälters nicht zu beeinträchtigen, wird dann der Auslassbereich in eine Stellung bewegt, in der die Entnahme des Flüssigkeitsbehälters durch den Auslassbereich der Rücklaufleitung nicht behindert wird. Der Benutzer kann demnach den Flüssigkeitsbehälter entnehmen und wieder anfügen, wie er dies von herkömmlichen Kaffeebrühvorrichtungen, die keine Rücklaufleitung aufweisen, gewohnt ist.

Eine sehr einfache Konstruktionsvariante sieht vor, dass ein an den Flüssigkeitsbehälter angrenzendes Gehäuse vorgesehen ist und der Auslassbereich der Rücklaufleitung in einer Gehäuseaussparung geführt ist. Der Auslassbereich muss demnach überhaupt nicht mit dem Flüssigkeitsbehälter in Berührung kommen, wodurch sich der Bewegungsvorgang zwischen Funktionsstellung und Entnahmestellung erleichtert. Ein eventuelles Verhaken zwischen diesen Bauteilen erfolgt demnach nicht.

Günstigerweise kann ein Bewegungsmechanismus vorgesehen sein, mittels dem der Auslassbereich von einer vorgeschobenen Funktionsstellung in eine rückgezogene Entnahmestellung und umgekehrt verschiebbar ist. Der Bewegungsmechanismus übernimmt demnach eine automatische Bewegung des Auslassbereiches zwischen diesen beiden Stellungen. Die Auslösung und Betätigung des Bewegungsmechanismus, sowie die Kraftübertragung können vielfältig ausgestaltet sein.

Gemäß einer weiteren Ausführungsform weist der Flüssigkeitsbehälter einen schwenkbaren Deckel auf. Bevorzugt kann dieser Deckel nicht an dem Flüssigkeitsbehälter selbst, sondern an dem Gehäuse schwenkbar angelenkt sein, wobei der Deckel als Betätigungshandhabe des Bewegungsmechanismus ausgestaltet ist. In aller Regel muss zur Entnahme des Flüssigkeitsbehälters der Deckel geöffnet werden. Bei dieser Ausgestaltung wird dann gleichzeitig mit dem Öffnen des Deckels auch der Auslassbereich in die Entnahmestellung überführt. Anschließend kann der Flüssigkeitsbehälter ohne Probleme entnommen und mit Wasser gefüllt werden. Durch anschließendes Wiederanfügen des Flüssigkeitsbehälters und Schließen des Deckels, wird der Auslassbereich dann wieder in die Funktionsstellung zurückbewegt.

Eine weitere Ausgestaltung sieht vor, dass der Bewegungsmechanismus eine Schwenkachse des Deckels umfasst, die mittels eines Exzentertriebs mit dem Auslassbereich gekoppelt ist. Der Exzentertrieb bestimmt dann, um welchen Weg sich der Auslassbereich zwischen den beiden Stellungen bewegt. Darüber hinaus ist ein Exzentertrieb ein einfaches Mittel, aus einer Drehbewegung (hier Schwenkung des Deckels) eine möglichst geradlinige Bewegung (hier des Auslassbereichs) zu bewirken.

Hierzu kann der Exzentertrieb ein Schubgestänge umfassen, das an seinem der Schwenkachse des Deckels abgewandten Ende eine den Auslassbereich der Rücklaufleitung verlängemde Tülle umfasst, in die der freie Endabschnitt der flexiblen Rücklaufleitung eingesteckt ist. Dies ermöglicht eine bessere Führung des Auslassbereiches, da die Tülle aus einem starren bzw. stabileren Material hergestellt werden kann, als die flexible Rücklaufleitung. Die flexible Rücklaufleitung kann dann aufgrund ihrer Materialeigenschaften und der gewählten Länge den Längenausgleich für die Bewegung bereitstellen.

Damit ein sicheres und exaktes Einfließen des Wassers in den Flüssigkeitsbehälter erfolgt und ein Abtropfen von Restwasser in der Entnahmestellung möglichst verhindert wird, kann der Auslassbereich eine Abtropfeinrichtung, bevorzugt in Form einer Abtropfkante, aufweisen. Diese sorgt dafür, dass in der Funktionsstellung das Wasser vollständig abtropft und am Auslassbereich kein Tropfen mehr anhängt, wenn dieser in die Entnahmestellung zurückbewegt wird. Hier bietet sich die Kombination mit einem Füllstandssensor des Flüssigkeitsbehälters an, der dann verhindert, dass ein Heizvorgang und ein weiteres Nachfließen von Wasser durch die Rücklaufleitung erfolgt. Es kann aber auch die Anwesenheit des Flüssigkeitsbehälters und/oder die Schwenkstellung des Deckels überwacht werden.

Der Flüssigkeitsbehälter und der Deckel können im geschlossenen Zustand des Deckels gemeinsam eine Öffnung bilden, durch die der Auslassbereich hindurchragt. Das sorgt dafür, dass der Flüssigkeitsbehälter im Wesentlichen vollständig geschlossen werden kann, obwohl an einer Stelle der Auslassbereich in diesen hineinragt.

Eine Ausführungsform sieht vor, dass eine Brüheinheit vorgesehen ist, die eine Brühkammer umfasst, und eine Zulaufleitung vorgesehen ist, die über ein Zulaufventil in der Brühkammer mündet und die Rücklaufleitung vor dem Zulaufventil zum Flüssigkeitsbehälter abzweigt. Des Weiteren kann die Rücklaufleitung ebenfalls verschließbar ausgestaltet sein. Hierdurch wird sichergestellt, dass Ausdehnungsvorgänge, die in der Zulaufleitung stattfinden, keinen Einfluss auf das Zulaufventil haben, da das Wasser drucklos in die Rücklaufleitung entweichen kann. Auch kann vor dem eigentlichen Einleiten von Heißwasser in die Brühkammer eine Art Spülvorgang stattfinden, wodurch sichergestellt wird, dass am Zulaufventil auch im Moment des Öffnens Wasser mit der gewünschten Temperatur vorliegt. In diesem Zusammenhang könnte man auch von einer Vorheizung des Einlaufbereichs der Brühkammer sprechen.

Der Auslassbereich der Rücklaufleitung kann auch so ausgestaltet sein, dass eine Umlenkung des Flüssigkeitsstroms nach unten in den Flüssigkeitsbehälter erfolgt. Zum Beispiel könnte das Ende des Auslassbereichs um 90° nach unten gebogen sein. Selbstverständlich könnten auch geeignete spritzgusstechnische Lösungen Anwendung finden, die ebenfalls einen verbesserten Spritzschutz gegenüber einer horizontal öffnenden Variante darstellen. Ein nach unten gerichteter Auslassbereich verbessert darüber hinaus die Sicherheit der gesamten Vorrichtung. Beim Aufheizen des Brühwassers im Boiler kann es teilweise zur Bildung eines Dampf-Wasser-Gemisches kommen, das mit erhöhter Geschwindigkeit aus dem Auslassbereich austreten kann. Dieses Gemisch muss konsequent nach unten in den Wasserbehälter gerichtet werden, um zu verhindern, dass Wasser über den Behälterrand hinausspritzen kann.

Im Folgenden wird anhand der Zeichnung eine Ausführungsform der erfindungsgemäßen Vorrichtung näher erläutert. Es zeigen:
- Fig. 1: eine seitliche Schnittansicht der Brühvorrichtung in einer Brühstellung,
- Fig. 2: eine perspektivische Seitenansicht des oberen Teils der Brühkammer,
- Fig. 3: eine perspektivische Draufsicht auf die Brühvorrichtung mit Flüssigkeitsbehälter und geöffnetem Deckel,
- Fig. 4: den Auslassbereich des Rücklaufs aus Fig. 3 in vergrößerter Darstellung,
- Fig. 5: den Auslassbereich des Rücklaufs in einer vorgeschobenen Funktionsstellung und
- Fig. 6: den Exzentertrieb aus Fig. 3 in einer vergrößerten Darstellung mit geschlossenem Deckel.

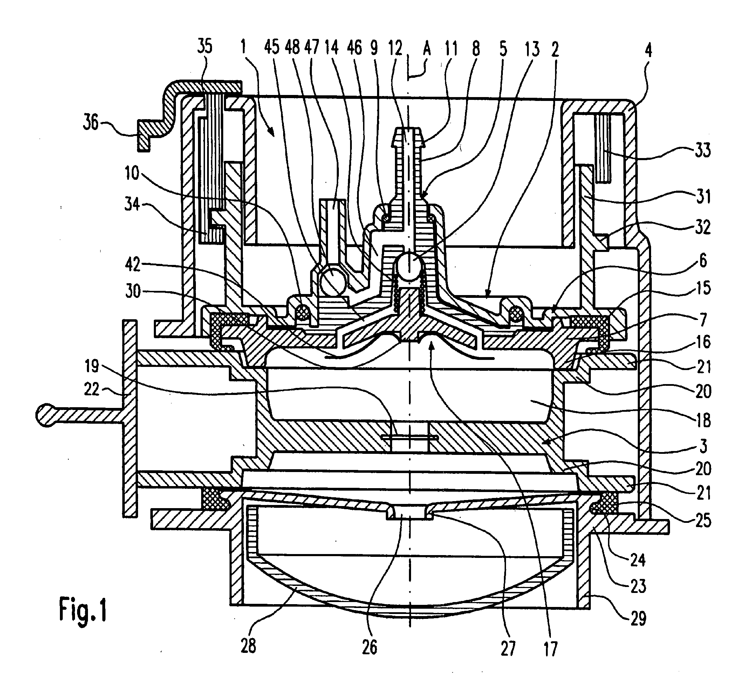

Die in Fig. 1 dargestellte Brühvorrichtung ist Bestandteil einer Niederdruckkaffeemaschine, die in hier nicht näher beschriebener Weise bekannte Baueinheiten, wie Wasservorratsbehälter, Boilervorrichtung, Wasserpumpe und die für den Brüh- und Pumpvorgang erforderliche Elektrik umfasst. Hierzu gibt es im Stand der Technik ausreichend Beispiele, weshalb hier auf diesen verwiesen wird.

Fig. 1 zeigt den Schnitt durch eine erfindungsgemäße Brühvorrichtung 1 mit einem oberen Brühkammerteil 2 und einer Wechselkassette 3, die in einem Gehäuse 4 angeordnet sind. Der obere Brühkammerteil 2 besteht aus einem innenliegenden Ventilteil 5, einem Abdeckteil 6 und einer Druckplatte 7. Dabei ist das Abdeckteil 6 derart ausgeformt, dass es das innenliegende Ventilteil 5 in sich aufnimmt, wobei ausschließlich der Wasseranschluss 8 des Ventilteils 5 aus dem Abdeckteil 6 herausragt.

Zwischen dem Abdeckteil 6 und dem Ventilteil 5 sind zwei Dichtungsringe 9 und 10 angeordnet, wobei der Dichtungsring 9 am Austritt des Wasseranschlusses 8 aus dem Abdeckteil 6 platziert ist und der Dichtungsring 10, am Außenumfang des sich vom Wasseranschluss 8 seitlich erstreckenden Ventilteils 5, das Ventilteil 5 zum Abdeckteil 6 abdichtet. Am Wasseranschluss 8 ist an dem offenliegenden Ende einen umlaufenden Kragen 11 vorhanden, die den Anschluss und die Befestigung einer Brühwasserleitung erleichtert. Am unteren Ende des durch den Wasseranschluss 8 führenden Einlaufkanals 12 für das Brühwasser ist eine Ventilkugel 13 angeordnet, die sich mit einer Feder 14 gegen die Druckplatte 7 abstützt. Vom Einlaufkanal 12 zweigt kurz oberhalb der Ventilkugel 13 ein Rücklauf 46 ab, der zunächst durch eine Bohrung im Ventilteil 5 verläuft und dann auf der Außenseite des Ventilsteils 5 sich zwischen dem Ventilteil 5 und dem Abdeckteil 6 bis zu einem Rücklaufanschluss 47 erstreckt, der im Abdeckteil 6 ausgebildet ist. Der zwischen dem Ventilteil 5 und dem Abdeckteil 6 verlaufende Abschnitt des Rücklaufs 46 ist durch die Dichtungsringe 9 und 10 zur Umgebung und zur Druckplatte 7 hin abgedichtet. Vor dem Rücklaufanschluss 47 ist als Floatationskörper eine Glaskugel 48 angeordnet, die den Rücklauf 46 zum Rücklaufanschluss 47 hin verschließt. Das Ventilteil 5 liegt mit seiner Unterseite an der Druckplatte 7 an, wobei die Feder 14 durch einen Vorsprung der Druckplatte 7 geführt wird. Zwischen dem Ventilteil 5 und der Druckplatte 7 erstrecken sich, ausgehend von der Ventilkugel 13 Zuführkanäle 45 für das Brühwasser, die sich zunächst seitlich erstrecken und an ihrem Ende durch die Druckplatte 7 hindurchgeführt sind. Das Abdeckteil 6 erstreckt sich vom seitlichen Dichtungsring 10 des Ventilteils 5 weiter nach außen und umfasst mit seiner Außenkante seitlich die Lippendichtung 15, die zwischen dem Abdeckteil 6 und der Druckplatte 7 platziert ist und in axialer Richtung nach unten teilweise über die Druckplatte 7 übersteht. Die Druckplatte 7 weist einen ringförmig umlaufenden, in axialer Richtung nach unten vorstehenden Steg 16 auf, der als einzigster Teil der Druckplatte 7 nach unten über die Lippendichtung 15 übersteht. In der Mitte der Druckplatte 7 ist um einen Zapfen 30 ein sich seitlich erstreckendes nach unten gerichtete Federelement 17 angeordnet.

Die Druckplatte 7 des oberen Brühkammerteils 2 bildet zusammen mit der Wechselkassette 3 eine Brühkammer 18. Zum Ausbilden der Brühkammer 18 weist die Wechselkassette 3 eine Vertiefung auf, in deren Mitte sich der Brühkammerauslass 19 befindet. Im Seitenbereich weist die Vertiefung einen ersten Absatz 20 auf, auf dem der Steg 16 der Druckplatte 7 aufliegt. An diesen Absatz 20 schließt sich in Form eines weiteren Absatzes ein Vorsprung 21 an, der mit der gegenüber dem Steg 16 zurückversetzten Lippendichtung 15 zusammenwirkt, um die Brühkammer 18 abzudichten. Der umlaufende Vorsprung 21 bildet gleichzeitig die Oberkante der Wechselkassette 3. Das Federelement 17 ragt mit seinen Federarmen 42 in die Brühkammer 18 hinein. Dabei bleiben die Federarme 42 hinter der Teilungsebene der Brühkammer 18 zwischen oberen Teil 2 und Wechselkassette 3 zurück, d.h. die Federarme 42 stehen nicht über den sich von der Druckplatte 7 nach unten erstreckenden Steg 16 über. Die Wechselkassette 3 weist an einer Seite einen Griff 22 auf, mit dem die Wechselkassette 3 in der Öffnungsstellung aus der Brühvorrichtung 1 herausgezogen werden kann: Dazu weist das Gehäuse 4 an der Seite des Griffes 22 eine entsprechende Öffnung auf. Die Wechselkassette 3 kann auch in einem gewendeten Zustand, d.h. die Ober- und Unterseite der Wechselkassette 3 sind vertauscht, in der Brühvorrichtung 1 eingesetzt werden. Dabei weist die in Fig. 1 als Unterseite der Wechselkassette 3 dargestellte Seite eine kleinere Vertiefung als die Oberseite auf, wodurch sich mit dieser Unterseite eine Brühkammer 18 mit einem verringerten Volumen bilden lässt. Um die Wechselfähigkeit zu ermöglichen, sind auch auf der Unterseite der Wechselkassette 3 im seitlichen Bereich der Vertiefung der Absatz 20 und der Vorsprung 21 ausgebildet.

Die Wechselkassette 3 stützt sich auf ihrer Unterseite mit dem äußeren Absatz 21 auf der Abstützplatte 23 ab, die seitlich über das Gehäuse 4 übersteht und mit diesem verbunden ist. die Abstützplatte 23 weist eine radial umlaufende Nut 24, in der ein Dichtungsring 25 angeordnet ist, der im geöffneten Zustand der Brühvorrichtung 1 über die Abstützplatte 23 vorsteht. Die Abstützplatte 23 weist mittig einen Ablauf 26 mit einem nach unten gezogen Spritzschutz 27 auf. Die Abstützplatte 23 weist zwischen dem Auflagebereich der Wechselkassette 3 und dem Ablauf 26 ein Gefälle auf, das den sicheren Ablauf des aus der Brühkammer 18 kommenden Kaffees in den Auslauf 28 ermöglicht.

Der in seinem Mittelbereich rund zulaufende Auslauf 28 ist in einer Vertiefung der Abstützplatte 23 angeordnet, die durch den sich in axialer Richtung erstreckenden Ringabschnitt 29 der Abstützplatte 23 gebildet wird. Der Auslauf 28 leitet den Kaffee zu mindestens einer, üblicherweise zwei, hier nicht gezeigten Auslauftüllen.

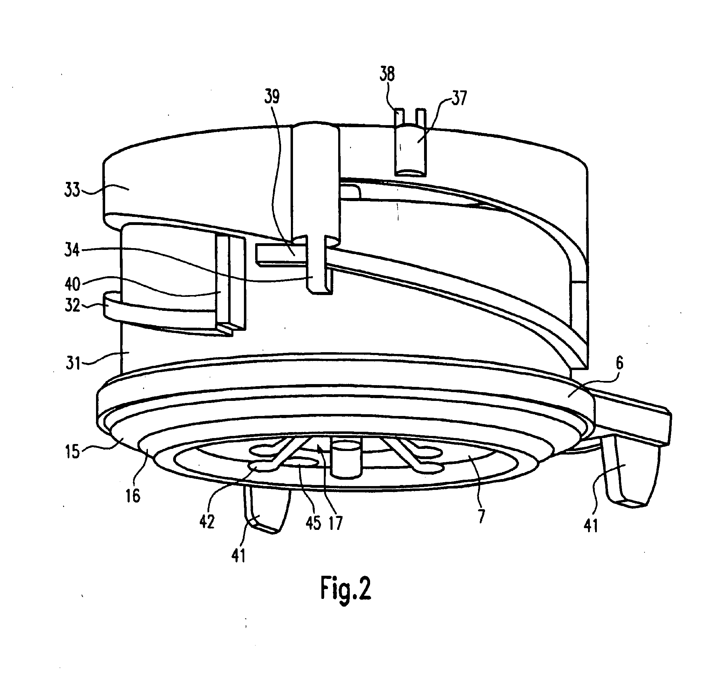

Um das obere Brühkammerteil 2 in axialer Richtung zu bewegen, ist das Abdeckteil 6 mit einem sich in axialer Richtung erstreckenden ringförmig ausgebildeten Aufdrückteil 31 verbunden. Am Außenumfang des Aufdrückteils 31 ist ein Führungssteg 32 ausgebildet, der sich wendelförmig um den Außenumfang des Aufdrückteils 31 erstreckt. Um den Außenumfang des Aufdrückteils 31 ist weiter das Betätigungsteil 33 platziert, das sich oberhalb des Führungsstegs 32 bis zu Oberkante des Gehäuses erstreckt. Das ebenfalls ringförmig ausgebildete Betätigungsteil 33 ist, wie in Fig. 2 deutlich erkennbar, rampenförmig ausgebildet und ist drehbar um das Aufdrückteil 31 angeordnet. Durch einen Öffnungsschlitz 35 an der Stirnseite des Gehäuses 4 ist das Betätigungsteil 33 mit einem Handgriff 36 verbunden. Dabei wird der Handgriff 36 an dem Gewindestutzen 37 verschraubt, der koaxial an der Oberkante des Betätigungsteils 33 angeordnet ist und mit einem Führungsabschnitt 38 in den Öffnungsschlitz hineinragt. Das Betätigungsteil 33 weist weiter einen Haken 34 auf, der den Führungssteg 32 umgreift. Der Führungssteg 32 weist einen waagerechten Stegteil 39 auf, der in der in Fig. 2 gezeigten Brühstellung mit dem Haken 34 des Betätigungsteils 33 in Verbindung steht, um die beim Brühen entstehenden Druckkräfte in vertikaler Richtung weiterzuleiten. Des Weiteren weist der Führungssteg 32 einen horizontalen Stegteil 40 auf, der im unteren Ende des wendelförmigen Führungsstegs 32 angeordnet ist und als Anschlag der Hubeinrichtung für die Öffnungsstellung der Brühvorrichtung 1 dient. Am Abdeckteil 6 sind zwei Arretierzapfen 41 angeordnet, die in axialer Richtung nach unten über den Steg 16 der Druckplatte 7 vorstehen und in entsprechende Öffnungen der Wechselkassette 3 eingreifen, um diese zu positionieren und ein Herausziehen in der Brühstellung zu verhindern.

In der Benutzung der erfindungsgemäßen Brühvorrichtung 1 kann in der Öffnungsstellung, in der das obere Brühkammerteil 2 durch das Betätigungsteil 33 und das Aufdrückteil 31 in eine obere Endstellung gefahren ist, wobei die obere Endstellung durch den Anschlag des vertikalen Stegteils 40 an den vertikalen Rampenbereich des Betätigungsteils definiert ist, die nur auf dem unteren Dichtring 25 aufliegende Wechselkassette 3 aus der Brühvorrichtung 1 entnommen werden, um die ausgewählte Vertiefung der Wechselkassette 3 mit einem bzw. gegebenenfalls zwei Filterkissen zu beladen. In der in Fig. 1 gezeigten Stellung wird die obere Vertiefung üblicherweise mit zwei Kaffeepads bzw. einem mit einer doppelten Menge an gemahlenem Kaffee gefüllten Kaffeepad, versehen. Die beladene Wechselkassette 3 wird wieder in die Brühvorrichtung 1 eingeschoben.

Nach Beendigung des Beladevorgangs wird die Brühvorrichtung 1 mit dem Handgriff 36 in die Brühstellung überführt. Dabei wird der Handgriff 36 um die vertikale Achse A geschwenkt und das mit ihm verbundene Betätigungsteil 33 um diese vertikale Achse A gedreht. Das Betätigungsteil 33 drückt mit seinen rampenförmig ausgebildeten Abschnitten auf den wendelförmigen Führungssteg 32, wobei sich der Kontakt zwischen dem Betätigungsteil 33 und dem Führungssteg 32 mit zunehmender Bewegung in Richtung der Brühstellung verringert. Durch den Druck auf den Führungssteg 32 wird das obere Brühkammerteil 2 in vertikaler Richtung auf die Wechselkassette 3 gedrückt. Bei dieser Schließbewegung berührt zunächst die Lippendichtung 15 den oberen Vorsprung 21. Als nächstes berührt der ringförmig umlaufende von der Druckplatte 7 axial vorstehende Steg 16 den oberen Absatz 20 der Wechselkassette 3, wobei sich die Lippendichtung 15 weiter an den oberen Vorsprung 21 andrückt. Bei einer Zunahme des axialen Drucks über den Steg 16 auf die Wechselkassette 3 wird der untere Vorsprung 21 auf die Abstützplatte 23 gedrückt, wobei der Dichtungsring 25 zusammengedrückt wird und damit seine Dichtwirkung zum unteren Vorsprung 21 erhöht. Durch den Eingriff des ringförmigen axial vorstehenden Stegs 16 in den oberen Absatz 20 wird während des Schließvorgangs die Lage der Wechselkassette 3 zum oberen Brühkammerteil 2 ausgerichtet. Während des Schließens der Brühkammer 18 drückt die Druckplatte 7 mit dem Federelement 17 das Kaffeepad gleichmäßig in die Vertiefung der Wechselkassette 3. Dadurch entsteht zwischen dem Kaffeepad und der Druckplatte 7 ein sich über einen großen Bereich der Druckplatte 7 radial erstreckender Hohlraum. In der Brühstellung ist die aus der Druckplatte 7 und der Vertiefung der Wechselkassette 3 gebildete Brühkammer 18 durch den auf den Absatz 20 drückenden Steg 16 und die auf den Vorsprung 21 drückende Lippendichtung 15 dicht gegenüber der Umgebung abgeschlossen.

Im Folgenden wird nunmehr die Wirkungs- und Funktionsweise der oben beschriebenen Brühvorrichtung 1 näher erläutert.

Bei der Inbetriebnahme einer Kaffeemaschine befinden sich sowohl im Einlaufkanal 12 für das Brühwasser als auch in der Zuleitung zum Ventilteil 5 Luft, Kondensat und/oder abgekühltes Brühwasser. Das Ventilteil 5 befindet sich dabei ebenso wie die umgebenden Teile des oberen Brühkammerteils 2 auf der Temperatur der Umgebung. Die Glaskugel 48 im Rücklauf 46 liegt auf dem Ventilteil 5 auf und gibt einen Durchlass zum Rücklaufanschluss 47 frei. Nach der Inbetriebnahme der Kaffeemaschine wird das Brühwasser in einer Boilervorrichtung erwärmt. Durch die mit steigender Temperatur zunehmende Ausdehnung des Brühwassers, wird erwärmtes Brühwasser durch die Anschlussleitung zum Ventilteil 5 und den Einlaufkanal 12 gedrückt. Das erwärmte Brühwasser ersetzt die bisher in diesen Leitungen stehende Luft, Kondensat und/oder abgekühltes Brühwasser, die durch den Rücklauf und den Rücklaufanschluss aus dem Ventilteil 5 herausgeführt werden. Bis zum Erreichen einer für den Brühvorgang ausreichenden Temperatur wird auch ein Teil des bereits erwärmten Brühwassers über den Rücklauf 46 und den Rücklaufanschluss 47 aus dem Ventilteil 5 herausgedrückt. Dadurch wird das Ventilteil 5 und die ihn umgebenden Elemente des Brühkammerteils 2 erwärmt. Dabei ist die Ausdehnung des Brühwassers in der Boilervorrichtung so gering und gleichmäßig, dass sich im Rücklauf 46 eine Strömungsgeschwindigkeit ausbildet, die nicht ausreicht, die Glaskugel 48 vom Ventilteil 5 abzuheben und gegen ihren Ventilsitz im Rücklaufanschluss 47 zu drücken. In diesem Betriebszustand bleibt daher der Rücklauf 46 offen und im Ventilteil 5 kann sich kein Druck aufbauen. Beim Erwärmen des Brühwassers in der Brühvorrichtung wird ständig ein kleiner Strom des erwärmten Brühwassers über das Ventilteil 5 geleitet, der beim Abkühlen des Brühwassers aus einem Wasservorratsbehälter in die Boilervorrichtung nachgeführt wird, wodurch sich auch in einem Stand-by-Modus das Ventilteil 5 nicht vollständig abkühlt und im Ventilteil 5 ständig erwärmtes Brühwasser zur Zubereitung von Kaffee bereitsteht.

In der in Fig. 1 dargestellten geschlossenen Brühstellung sind üblicherweise in der Brühkammer 18 zwei aufeinander liegende Filterpads angeordnet. Ein umlaufender Verriegelungsrand des oberen Filterpads liegt dabei auf der Oberseite des oberen Absatzes 20 auf und befindet sich demnach in der Brühstellung zwischen dem Absatz 20 und dem Steg 16. In dieser geschlossenen Brühstellung wird nach der Auslösung des Brühvorgangs von einer Pumpe heißes Brühwasser über die Anschlussleitung dem Ventilteil 5 zugeführt. Da das Einlassventil aus Ventilkugel 13, Ventilsitz und Feder 14 zunächst geschlossen ist, strömt das in der Anschlussleitung enthaltene Brühwasser mit geringer Temperatur zum Teil als Leckwasser über den Rücklauf 46 und den Rücklaufanschluss 47 aus dem Ventilteil 5 ab. Der große Volumenstrom durch den Rücklauf 46 erzeugt im Bereich der Glaskugel 48 eine hohe Strömungsgeschwindigkeit, die die Glaskugel 48 vom Ventilteil 5 abhebt und mitreißt. Die Glaskugel 48 wird gegen den Ventilsitz im Rücklaufanschluss 47 gedrückt und verschließt den Rücklaufanschluss 47. Als Folge steigt der Druck im Einlaufkanal 12 sowie im Rücklauf 46. Durch den Druckanstieg im Rücklauf 46 im Verhältnis zum Rücklaufanschluss 47 wird die Glaskugel 48 in ihrer Schließposition auf dem Ventilsitz gehalten. Als Folge des Druckanstiegs im Einlaufkanal 12 öffnet sich das Einlassventil, bevorzugt bei einem Druck, der den bevorzugten Betriebsdruck zwischen 1,5 bar bis 1,8 bar wesentlich unterschreitet, bevorzugt zwischen 0,3 bar und 0,8 bar, und der Brühvorgang kann beginnen. Durch den Druck des Brühwassers wird die Feder 14 durch die Ventilkugel 13 zusammengedrückt, wobei die Ventilkugel 13 sich von ihrem Ventilsitz löst und einen Wasserzulauf zur Brühkammer 18 durch die Zuführkanäle 45 und deren Austrittsöffnungen ermöglicht. Je nach Ausgestaltung des Brühkammerauslasses 19 kann die Pumpe in der gegenüber der Umgebung geschlossenen Brühkammer 18 bei einer in einer Niederdruckkaffeemaschine eingesetzten Brühvorrichtung 1 einen Druck zwischen 1,0 bar und 2,0 bar aufbauen. Das Brühwasser wird vom Ventilteil 5 durch mehrere Zuführkanäle 45 in den Hohlraum zwischen Federelement 17 und Druckplatte 7 eingespritzt. Dabei trifft das meiste Wasser zunächst auf einen der Federarme 42 und wird von dort fein verteilt durch den Hohlraum auf dem Kaffeepad flächig verteilt. Das Kaffeepad wird zunächst durch das Wasser befeuchtet und im weiteren Verlauf von dem Brühwasser durchströmt, das am Brühkammerauslass 19 aus der Brühkammer 18 als Kaffee austritt und über den Ablauf 26 und dem Auslauf 28 aus der oder den Auslauftüllen aus der Brühvorrichtung 1 abläuft. Die Abstützplatte 23 ist in dem Bereich unter der Brühkammer 18 zum Ablauf 26 hin geneigt, um einen sicheren und vollständigen Ablauf des Kaffees zu gewährleisten. Nach einem bestimmten, einstellbaren Zeitraum bzw. einer geförderten Wassermenge, wird die Pumpe wieder abgeschaltet und damit der Brühvorgang beendet.

Nach dem Ende des Brühvorgangs kann die Brühkammer 18 durch ein Rückschwenken des Handgriffs 36 wieder geöffnet werden. Beim Rückschwenken des Handgriffs 36 wird das obere Brühkammerteil 2 in axialer Richtung nach oben bewegt, weil der Führungssteg 32 von dem Haken 34 umgriffen wird. Der Haken 34 überträgt die durch die Drehbewegung des Betätigungsteils 32 induzierte axiale Bewegung in Richtung der Öffnungsstellung über den Führungssteg 32 auf das Aufdrückteil 31 und damit auf das obere Brühkammerteil 2. Beim Öffnen der Brühkammer 18 drückt das Federelement 17 mit seinen Federarmen 42 auf das feuchte Kaffeepad und löst die nach dem Brühvorgang an der Druckplatte 7 anhaftenden Bereiche des Kaffeepads. So verbleibt das Kaffeepad beim Öffnen der Brühvorrichtung in der Vertiefung der Wechselkassette 3 und wird nicht zusammen mit dem oberen Teil der Brühkammer nach oben bewegt.

In der nicht dargestellten Öffnungsstellung sind die konisch ausgestalteten Arretierzapfen 41 aus den entsprechenden Öffnungen in der Wechselkassette 3 herausbewegt und geben diese frei. Die Druckplatte 7 ist ebenfalls so weit nach oben bewegt, dass sich der Steg 16 oberhalb der Öffnung für die Wechselkassette 3 im Gehäuse 4 befindet. In dieser Öffnungsstellung kann die Wechselkassette 3 zusammen mit dem gebrauchten, durch das Brühwasser befeuchteten Kaffeepad aus der Brühvorrichtung 1 am Griff 22 herausgezogen werden. Da das Federelement 17 beim Öffnen der Brühkammer 18 das Kaffeepad vom oberen Teil 2 gelöst hat, so dass das Kaffeepad sich in der Öffnungsstellung immer in der Vertiefung der Wechselkassette 3 befindet, kann die Wechselkassette 3 in der Öffnungsstellung immer ohne Probleme, d.h. ohne ein Verklemmen oder eine Beschädigung des Kaffeepads, aus der Brühvorrichtung 1 entnommen werden. Nach der Entnahme des verbrauchten Kaffeepads aus der Brühkammervertiefung der Wechselkassette 3 kann die Wechselkassette 3 für einen weiteren Brühvorgang emeut mit einem Kaffeepad versehen werden, oder ungefüllt in die Brühvorrichtung zurückgeschoben werden.

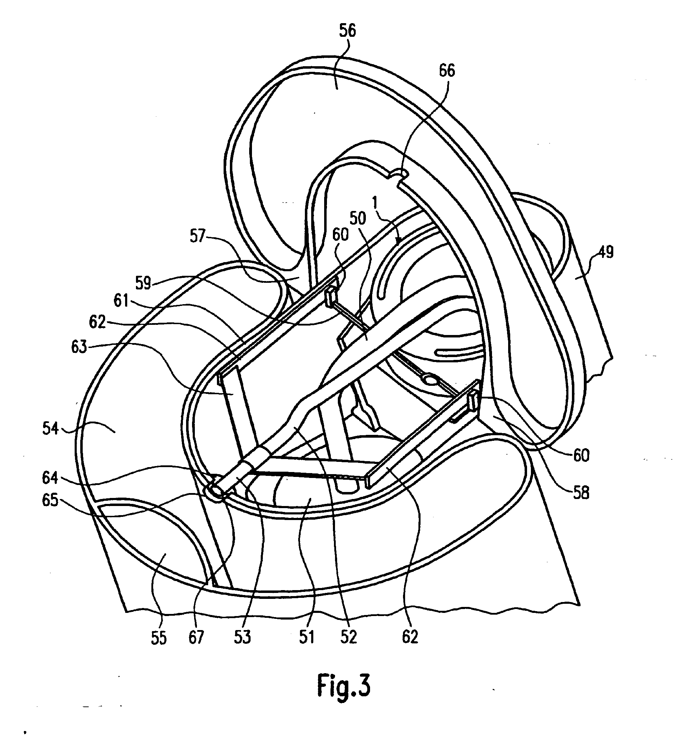

In Fig. 3 ist die oben beschriebene Brühvorrichtung im eingebauten Zustand in dem Gehäuse 49 einer Kaffeemaschine dargestellt, wobei die obere Gehäuseabdeckung entfernt ist. Auf den Wasseranschluss 8 ist eine Zulaufleitung 50 aufgeschoben, die sich in den hinteren Bereich des Gehäuses 49 zu einem Boiler 51 erstreckt, der für die Erwärmung des Wassers zuständig ist. Parallel hierzu ist auf den Rücklaufanschluss 47 eine Rücklaufleitung 52 aufgesteckt. Bei der Rücklaufleitung 52 handelt sich um einen flexiblen Schlauch, der mit seinem freien Endbereich in eine Tülle 53 eingesteckt ist.

An die hintere Kontur des Gehäuses 49 ist ein abnehmbarer Wassertank 54 als Flüssigkeitsbehälter vorgesehen. Der Wassertank 54 weist eine Bogenform auf, die sich an das Gehäuse 49 anschmiegt. Der Wassertank 54 ist mit einer Griffmulde 55 zur Entnahme und zum Wiedereinsetzen ausgestattet. Die obere Öffnung des Wassertanks 54 ist über einen am Gehäuse angebrachten Deckel 56 verschließbar. Der bogenförmige Deckel 56 ist jeweils seitlich am Gehäuse 49 schwenkbar gelagert und braucht demnach nicht zusammen mit dem Wassertank 54 entnommen werden. Die beiden seitlichen Endbereiche 57 und 58 des Deckels 56 sind über eine Exzenterschwenkachse 59 miteinander verbunden. Die Exzenterschwenkachse 59 erstreckt sich durch geeignete Öffnungen in dem Gehäuse 49.

Die Exzenter 60 der Exzenterschwenkachse 59 sind mit einem Schubgestänge 61 verbunden. Das Schubgestänge 61 weist zwei parallel zueinander verlaufende Längsstangen 62 und zwei schräg aufeinander zulaufende Querstangen 63 auf. Die Querstangen 63 sind mit der Tülle 53 verbunden.

Die Tülle 53 liegt mit ihrem vorderen Bereich in einer Führungsauflage 64 des Gehäuses 49 auf. Das Gehäuse 49 und der Wassertank 54 weisen in diesem Bereich eine halbkreisförmige Aussparung 65 auf, die zusammen mit einer gegenläufig, halbkreisförmig an der nicht dargestellten Gehäuseabdeckung und am Deckel 56 gestalteten Aussparung 66 die Tülle 53 im geschlossenen Zustand des Deckels 56 umgibt.
Am vorderen Ende weist die Tülle 53 eine Abtropfanformung 67 zum Erzeugen einer Abtropfkante auf.

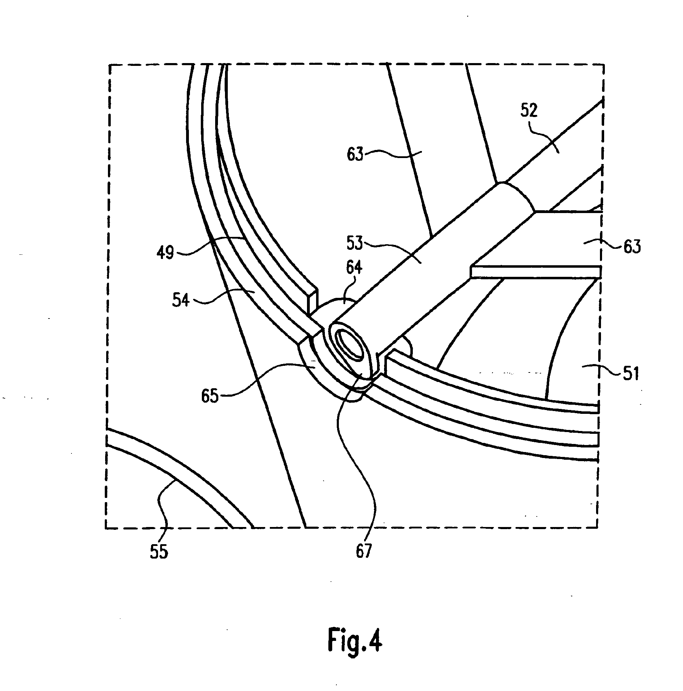

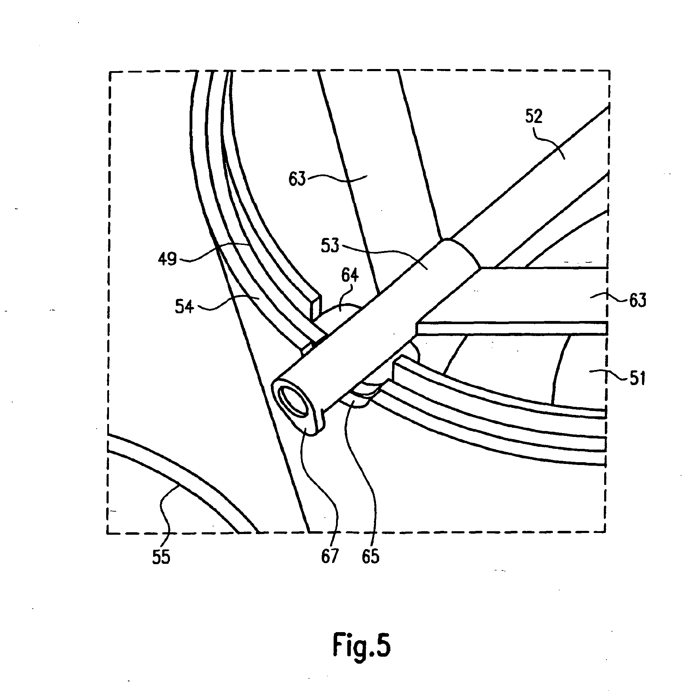

Das Schubgestänge 61 sowie die Exzenterschwenkachse 59 mit den Exzentern 60 sind derart ausgestaltet, dass durch die Benutzung des Deckels 56 als Betätigungshandhabe die Tülle 53 zusammen mit der Rücklaufleitung 52 von der in Fig. 3 und 4 gezeigten Entnahmestellung in die in Fig. 5 gezeigte Funktionsstellung überführbar ist. Zur Verdeutlichung wurde in Fig. 5 der an sich in dieser Stellung geschlossene Deckel 56 weggelassen.

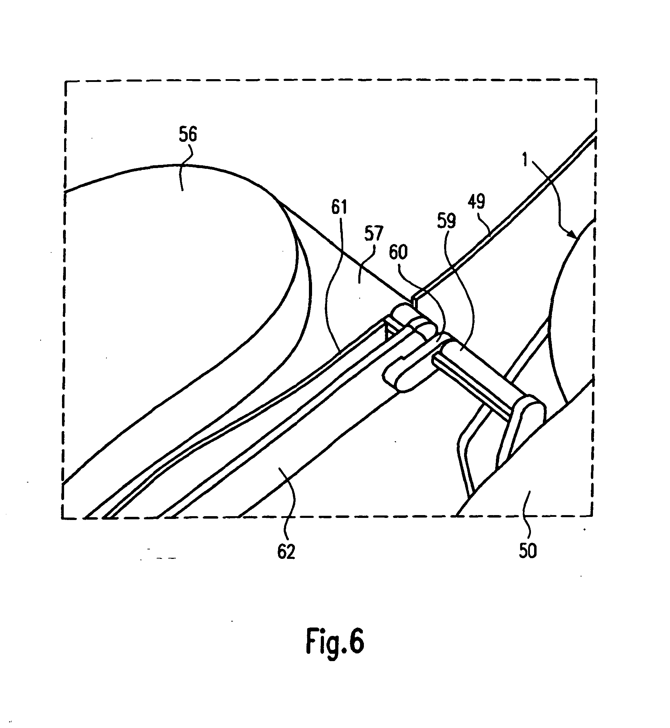

Anhand der Fig. 6 ist die Anbindung des Exzenters 60 auf der einen Seite an die Längsstange 56 sehr gut dargestellt. Die erreichbare Längsverschiebung entspricht im Wesentlichen dem Abstand der Mittellinie der Exzenterachse 59 und dem Anlenkpunkt des Exzenters 60 an der Längsstange 62.

Üblicherweise befindet sich der Deckel 56 während der Benutzung der Kaffeemaschine in der in Fig. 6 gezeigten Stellung. In dieser Stellung liegt der Exzenter 60 flach in Verlängerung der Längsstange 62 und die Tülle ist in die in Fig. 5 dargestellte Funktionsstellung vorgeschoben. Das bedeutet, dass sich der dadurch gebildete Auslassbereich der Rücklaufleitung 52 in den Wassertank 54 hineinerstreckt, so dass über den Rücklauf 52 abfließendes Wasser in den Wassertank 54 abtropfen kann.

Soll nunmehr der Wassertank 54 zu einem neuen Befüllen entnommen werden, so wird der Deckel 56 in die in Fig. 3 dargestellte Stellung hochgeschwenkt. Gleichzeitig wird die Exzenterachse 59 mitbewegt, so dass die Exzenter 60 mit ihrer langen Seite nunmehr nach oben weisen und hierdurch die Längsstangen 56 nach hinten ziehen. Gleichzeitig wird über die Querstangen 63 auch die Tülle 53 nach hinten in die in Fig. 4 dargestellte Entnahmestellung bewegt. Die Abtropfanformung 67 wirkt hierbei auch als Anschlag an der Führungsauflage 64. Die Tülle 53 ist demnach vollständig aus dem Bereich des Wassertanks 54 hinausbewegt, so dass dieser entnommen werden kann. Aufgrund der Tatsache, dass der Wassertank 54 mittels einer Steckaufnahme an der Maschine befestigt ist, muss dieser zuerst nach oben, also an der Tülle 53 vorbei, bewegt werden, bevor eine Entnahme möglich ist. In der in Fig. 4 dargestellten Entnahmestellung stellt somit die Tülle 53 für diesen Bewegungsvorgang kein Hindernis dar. Nach dem Befüllen des Wassertanks 54 wird dieser wieder an das Gehäuse 49 angefügt und der Deckel 56 wieder nach unten geschwenkt, wodurch die Tülle 53 wieder in ihre Funktionsstellung (siehe Fig. 5) überführt wird.

## Patentansprüche

1. Kaffeebrühvorrichtung mit einem entnehmbaren Flüssigkeitsbehälter (54), **dadurch gekennzeichnet, dass** eine Rücklaufleitung (52) vorgesehen ist, deren Auslassbereich zwischen einer Funktionsstellung, in der der Auslassbereich in den Flüssigkeitsbehälter (54) mündet, und einer Entnahmestellung zum Entnehmen des Flüssigkeitsbehälters (54) bewegbar ausgestaltet ist.

2. Vorrichtung nach Anspruch 1, **dadurch gekennzeichnet, dass** ein an den Flüssigkeitsbehälter (54) angrenzendes Gehäuse (49) vorgesehen ist und der Auslassbereich der Rücklaufleitung (52) in einer Gehäuseaussparung (64) geführt ist.

3. Vorrichtung nach Anspruch 1 oder 2, **dadurch gekennzeichnet, dass** eine Bewegungsmechanismus vorgesehen ist, mittels dem der Auslassbereich von einer vorgeschobenen Funktionsstellung in eine rückgezogene Entnahmestellung und umgekehrt verschiebbar ist.

4. Vorrichtung nach einem der Ansprüche 1 bis 3, **dadurch gekennzeichnet, dass** der Flüssigkeitsbehälter (54) durch einen schwenkbaren Deckel (56) verschließbar ist.

5. Vorrichtung nach Anspruch 4, **dadurch gekennzeichnet, dass** der Deckel (56) schwenkbar am Gehäuse (49) angelenkt ist und als Betätigungshandhabe des Bewegungsmechanismus ausgestaltet ist.

6. Vorrichtung nach Anspruch 5, **dadurch gekennzeichnet, dass** der Bewegungsmechanismus eine Schwenkachse (59) des Deckels (56) umfasst, die mittels eines Exzentertriebs mit dem Auslassbereich gekoppelt ist.

7. Vorrichtung nach Anspruch 6, **dadurch gekennzeichnet, dass** der Exzentertrieb ein Schubgestänge (61) umfasst, das an seinem der Schwenkachse (59) des Deckels (56) abgewandten Ende eine den Auslassbereich der Rücklaufleitung (52) verlängemde Tülle (53) umfasst, in die der freie Endbereich der flexiblen Rücklaufleitung (52) eingesteckt ist.

8. Vorrichtung nach einem der Ansprüche 1 bis 7, **dadurch gekennzeichnet, dass** der Auslassbereich eine Abtropfeinrichtung (67), bevorzugt in Form einer Abtropfkante, aufweist.

9. Vorrichtung nach einem der Ansprüche 4 bis 7, **dadurch gekennzeichnet, dass** der Flüssigkeitsbehälter (54) und der Deckel (56) im geschlossenen Zustand des Deckels gemeinsam eine Öffnung (65,66) bilden, durch die der Auslassbereich hindurchragt.

10. Vorrichtung nach einem der vorangegangenen Ansprüche, **dadurch gekennzeichnet, dass** eine Brüheinheit (1) vorgesehen ist, die eine Brühkammer (18) umfasst, und eine Zulaufleitung (50) vorgesehen ist, die über ein Zulaufventil (13) in die Brühkammer (18) mündet und die Rücklaufleitung (52) vor dem Zulaufventil (13) zum Flüssigkeitsbehälter (54) abzweigt.

## Claims

1. Coffee brewing device with a removable liquid container (54), **characterised in that** a return flow pipe (52) is provided, the outlet region of which is designed so that it can be moved between an operating position in which the outlet region opens into the liquid container (54) and a removal position for removing the liquid container (54).

2. Device as claimed in claim 1, **characterised in that** a housing (49) is provided adjoining the liquid container (54) and the outlet region of the return flow pipe (52) is run through a housing cut-out (64).

3. Device as claimed in claim 1 or 2, **characterised in that** a motion mechanism is provided, by means of which the outlet region can be moved from a pushed-forward operating position into a retracted removal position and vice versa.

4. Device as claimed in one of claims 1 to 3, **characterised in that** the liquid container (54) is closed by a pivotable lid (56).

5. Device as claimed in claim 4, **characterised in that** the lid (56) is hinge mounted so as to be pivotable on the housing (49) and is designed as an operating handle of the motion mechanism.

6. Device as claimed in claim 5, **characterised in that** the motion mechanism is a hinge pin (59) of the lid (56), which is coupled with the outlet region by means of an eccentric drive.

7. Device as claimed in claim 6, **characterised in that** the eccentric drive has a push rod (61) with a grommet (53) constituting an extension of the outlet region of the return flow pipe (52) at its end remote from the hinge pin (59) of the lid (56), in which the free end region of the flexible return flow pipe (52) is inserted.

8. Device as claimed in one of claims 1 to 7, **characterised in that** the outlet region has a drip system (67), preferably in the form of a drip edge.

9. Device as claimed in one of claims 4 to 7, **characterised in that**, when the lid is in the closed state, the liquid container (54) and the lid (56) together form an orifice (65, 66) through which the outlet region extends.

10. Device as claimed in one of the preceding claims, **characterised in that** a brewing unit (1) is provided, which has a brewing chamber (18), and an inlet flow pipe (50) is provided, which opens into the brewing chamber (18) via an inlet valve (13) and the return flow line (52) branches off to the liquid container (54) upstream of the inlet valve (13).

## Revendications

1. Machine à café comportant un réservoir de liquide (54) amovible, **caractérisée en ce qu'**il est prévu une conduite de retour (52) dont la zone de sortie est agencée de façon à pouvoir être déplacée entre une position fonctionnelle, dans laquelle la zone de sortie débouche dans le réservoir de liquide (54), et une position d'enlèvement permettant d'enlever le réservoir de liquide (54).

2. Machine selon la revendication 1, **caractérisée en ce qu'**il est prévu un boîtier (49) adjacent au réservoir de liquide (54), et **en ce que** la zone de sortie de la conduite de retour (52) est guidée dans un évidement (64) du boîtier.

3. Machine selon la revendication 1 ou 2, **caractérisée en ce qu'**il est prévu un mécanisme de déplacement, à l'aide duquel la zone de sortie peut passer d'une position fonctionnelle avancée à une position d'enlèvement rétractée, et inversement.

4. Machine selon l'une des revendications 1 à 3, **caractérisée en ce que** le réservoir de liquide (54) peut être fermé par un couvercle pivotant (56).

5. Machine selon la revendication 4, **caractérisée en ce que** le couvercle (56) est articulé sur le boîtier (49) de façon à pouvoir pivoter, et est agencé sous la forme d'une manette d'actionnement du mécanisme de déplacement.

6. Machine selon la revendication 5, **caractérisée en ce que** le mécanisme de déplacement comporte un axe de pivotement (59) du couvercle (56), qui est couplé avec la zone de sortie à l'aide d'une transmission à excentrique.

7. Machine selon la revendication 6, **caractérisée en ce que** la transmission à excentrique comporte une tringlerie de poussée (61) qui, sur son extrémité opposée à l'axe de pivotement (59) du couvercle (56), comporte une douille (53) prolongeant la zone de sortie de la conduite de retour (52), dans laquelle est insérée la zone d'extrémité libre de la conduite de retour (52) flexible.

8. Machine selon l'une des revendications 1 à 7, **caractérisée en ce que** la zone de sortie comporte un dispositif d'égouttage (67), de préférence sous la forme d'un bord d'égouttage.

9. Machine selon l'une des revendications 4 à 7, **caractérisée en ce que**, à l'état fermé du couvercle, le réservoir de liquide (54) et le couvercle (56) forment conjointement un orifice (65, 66) qui est traversé par la zone de sortie.

10. Machine selon l'une des revendications précédentes, **caractérisée en ce qu'**il est prévu une unité de percolation (1) comportant une chambre de percolation (18), ainsi qu'une conduite d'alimentation (50), qui débouche dans la chambre de percolation (18) par l'intermédiaire d'un clapet d'alimentation (13), et **en ce que** la conduite de retour (52) bifurque en amont du clapet d'alimentation (13) vers le réservoir de liquide (54).
